# EUROPEAN PATENT SPECIFICATION

(11) **EP 2 715 124 B1**
(45) Date of publication and mention of the grant of the patent: **01.06.2016**
(21) Application number: 12768916.4
(22) Date of filing: 30.04.2012
(51) Int. Cl.: F01D 17/14, B64D 41/00, F03D 9/00

(54) **RAM AIR TURBINE ELECTRICAL POWER GENERATING APPARATUS WITH ADJUSTABLE EXHAUST PANEL**
STAULUFTTURBINEN-VORRICHTUNG ZUR ERZEUGUNG VON ELEKTRISCHER ENERGIE MIT EINSTELLBARER ABGASPANEEL
DISPOSITIF DE GÉNÉRATION DE COURANT ÉLECTRIQUE À TURBINE À AIR DYNAMIQUE AVEC PANNEAU D'ÉCHAPPEMENT RÉGLABLE

(30) Priority: 24.05.2011 US 201113114571
(43) Date of publication of application: 09.04.2014
(73) Proprietor: Advanced Technologies Group, Inc, Stuart FL 34997 (US)
(72) Inventor: JUSTAK, John, F., Stuart, FL 34996 (US)
(74) Representative: Lorenz, Markus
(86) International application number: PCT/US2012/035771
(87) International publication number: WO 2012/166271

(56) References cited:
- WO-A1-2010/119209
- CA-A1- 2 753 122
- GB-A- 1 142 660
- US-A1- 2002 122 717
- US-A1- 2010 171 314
- US-A1- 2011 033 280

## Description

### FEDERALLY SPONSORED RESEARCH

This invention was made with government support under Small Business Innovation Research Contract Nos. N68335-08-C-0276 and N68335-09-C-0313 awarded by the United States Navy. The government has certain rights in the invention.

### FIELD OF THE INVENTION

This invention relates to ram air turbine electric power generating apparatus whose operation is based on' free stream flow in which power generation is derived from the kinetic energy of a stream of fluid.

### BACKGROUND OF THE INVENTION

Ram air turbines are commonly used in military and commercial aircraft to provide a source of hydraulic or electrical power in the event of an emergency. Modem aircraft generate power through the main engines or via an auxiliary power unit such as a fuel-burning turbine typically located in the tail of the aircraft. In most applications for commercial aircraft, ram air turbines are retracted into the fuselage or wing(s) under normal operating conditions, but are deployed in the event of an emergency loss of power. They typically comprise two or more blades, much like windmill blades, carried by a shaft which is coupled to a generator. The blades rotate the shaft in response to contact with the air stream produced by movement of the aircraft during flight. Depending upon the size of the blades, the capacity of the electrical generator and the flight speed of the aircraft, ram air turbines can supply as much as 70kW for use in powering flight controls, linked hydraulics and flight-critical instrumentation.

Military aircraft, particularly those designed for electronic warfare, have in the past typically used ram air turbines externally mounted to a pod to deliver power for electronic equipment employed to counter enemy air defenses using reactive and/or pre-emptive jamming techniques, to provide stand-off escort jamming, to initiate electronic attacks and to provide self-protection capability for the aircraft. A pod is essentially a generally cylindrical, aerodynamically-shaped housing mounted to the underside of the aircraft wings. More recently, submerged ram air turbines have been proposed as a replacement for externally mounted designs. The term "submerged" in this context refers to the placement of ram air turbines within the interior of pods in alignment with one or more inlets which direct a flow of air onto the blades of the turbine which is then exhausted through the pod outlet(s).

The increasing sophistication of electronic equipment employed in military aircraft has created a requirement for additional power at flight speeds of 200 to 220 knots. Existing externally mounted and submerged ram air turbines do not provide sufficient power output, and there is a need for an improved ram air turbine generating system.

US 2010/171314 A1 discloses a power generator including a housing to house the power generator, an inlet chamber to import fluid, a compression chamber to compress the fluid from the inlet chamber, a turbine chamber including a vertical turbine to generate power from the compressed fluid, and an outlet chamber to output the exhaust fluid. The inlet chambers include a rotatable baffle to open and close the inlet chamber. The outlet chamber cooperate with the opening and closing of the baffles, and the outlet chamber includes an output port at the direction of the outlet port is opposed to the open baffles.

US 2011/033280 A1 discloses a hybrid ram air turbine including a generally conical-shaped shaft which mounts a number of vanes wrapped in a substantially helical orientation along the shaft with a portion of each vane being formed in the general shape of a reaction turbine blade and another portion in the general shape of an impulse turbine blade. A number of fixed inlet guide vanes having a convergent wedge shape direct a flow of air onto the blades of the turbine which is mounted within the interior of a pod.

US 2002/122717 A1 provides a low drag ducted ram air turbine generator and cooling system. The ducted ram air turbine generator and cooling system has reduced drag with respect to prior ram air turbine generator systems while extracting dynamic energy from the air stream during the complete range of intended flight operating regimes.

### SUMMARY OF THE INVENTION

This invention is directed to a ram air turbine electric power generating apparatus according to claim 1, which, in one presently preferred application, is capable of generating in excess of 100kW of power when mounted to the pod of an aircraft flying at speeds of about 220 knots and at an altitude of about 25,000 feet.

In one presently preferred embodiment, at least one exhaust opening is formed in the housing of the pod through which an air stream flows in an axial direction. A number of adjustable exhaust panels are hinged to the pod housing in position to move between a closed position in which the exhaust opening(s) is sealed, and an open position in which the exhaust panels are oriented at up to about a 30° angle relative to the pod housing. Preferably, the exhaust panels are each connected by a pivot arm to an actuator ring, which, in turn, is drivingly connected to a gear reducer coupled to a motor. In response to operation of the motor and gear reducer, the actuator ring moves in one direction to extend the control arms causing the exhaust panels to open and then in the opposite direction to retract the control arms and move the exhaust panels to a closed position overlying the exhaust opening(s).

The ram air turbine electric power generating apparatus of this invention is effective to create a negative pressure in at least the aft portion of the pod interior which tends to draw air into the pod, and which assists in maintaining or at least avoiding an appreciable drop in the kinetic energy of the air stream moving through the pod interior.

### BRIEF DESCRIPTION OF THE DRAWINGS

The structure, operation and advantages of the presently preferred embodiment of this invention will become further apparent upon consideration of the following description, taken in conjunction with the accompanying drawings, wherein:
FIG. 1 is a perspective view of the submerged ram air turbine generating system of this invention in the particular application wherein it is utilized with a pod for mounting to the wing or other location on an aircraft;
FIG. 2 is a cross sectional view of a portion of the pod shown in Fig. 1;
FIG. 3 is a plan view of one set of louvers located in the submerged inlet of the system, depicted in the closed position;
FIG 4 is a cross sectional, side elevational view of the louvers shown in Fig. 3 in the closed position;
FIG. 5 is a view similar to Fig. 4 except with the louvers in an open position;
FIG. 6 is an end view of the inlet guide vanes as viewed from the upstream end of the hybrid ram air turbine;
FIG. 7 is an end view of an alternative embodiment of the inlet guide vanes wherein the angle of such vanes is adjustable;
FIG. 8 is a cross sectional view taken generally along line 11-11 of Fig. 10;
FIG. 9 is a side elevational view of the adjustable inlet guide vanes depicted in Figs. 10 and 11;
FIG. 10 is an enlarged view of the encircled portion of Fig. 12 illustrating the change in angle of the inlet guide vanes in response to actuation of a control arm;
FIG. 11 is a perspective view of the hybrid ram air turbine of this invention;
FIG. 12 is an end view of the hybrid ram air turbine shown in Fig. 14;
FIG. 13 is a schematic representation of inlet guide vanes, a turbine blade and a splitter showing the deflection of an air stream by the vanes onto the blade and splitter;
FIG. 14 is a perspective view of the hybrid ram air turbine of this invention in which a single turbine blade is shown;
FIG. 15 is a side elevational view of Fig. 14;
FIG. 16 is a plan view of Fig. 14;
FIG. 17 is an end view of Fig. 14, as seen from the aft end of the hybrid ram air turbine;
FIG. 18 is an end view of Fig. 14, as seen from the forward end of the hybrid ram air turbine; and
FIG. 19 is a partial view of the aft portion of the submerged ram air turbine generating system of this invention depicting one of the exhaust panels and its connection to a drive motor via a gear reducer and actuator ring.

### DETAILED DESCRIPTION OF THE INVENTION

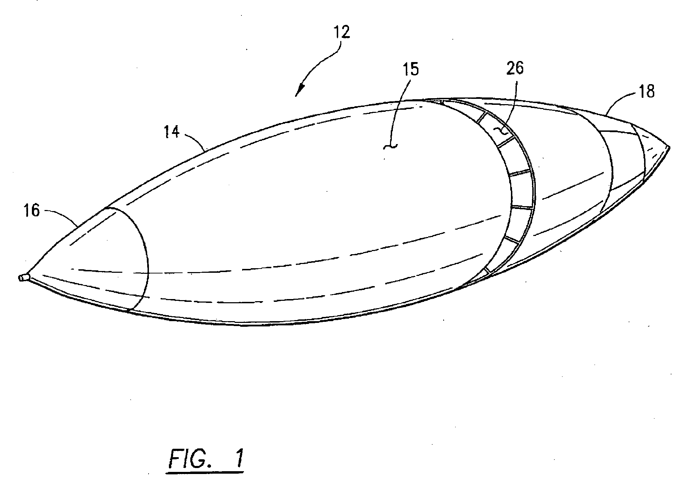

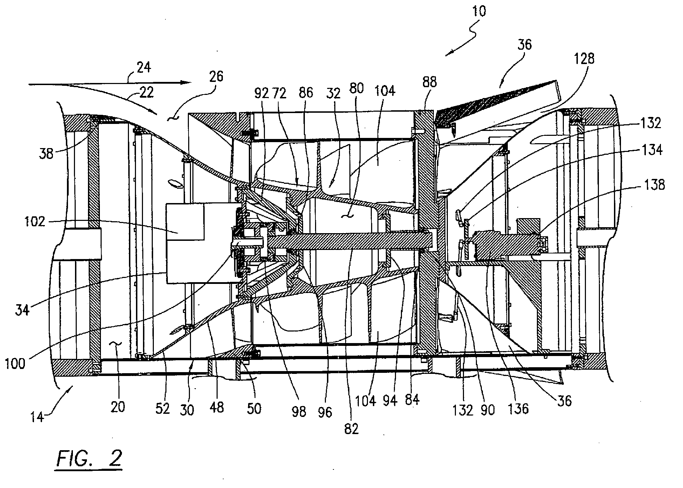

Referring initially to Figs. 1 and 2, the submerged ram air turbine generating system 10 of this invention is depicted in one preferred application wherein it is incorporated into a pod 12 typically mounted to the underside of the wing of an aircraft (not shown). The pod 12 generally includes a pod housing 14 having an outer surface 15, a forward end 16, an aft end 18 and a hollow interior 20. For purposes of the present discussion, the terms "forward," "aft," "upstream" and "downstream" refer to the direction of a flow of air depicted by arrows 22 and 24 in Fig. 2. In particular, air flowing over the pod 12 during flight of an aircraft impacts the forward end 16 of the pod housing 16 first, and a portion of such flow identifies as air stream 22 enters the pod interior 20 through a submerged inlet 26 of the system 10, discussed below, while the remaining portion of the flow denoted as air stream 24 continues along the outer surface 15 of the pod housing 16. Additionally, the terms "inner," "outer," and "radially" denote spatial orientations relative to the outer surface 15 of the pod housing 14 and its hollow interior 20, i.e. the interior 20 of the pod housing 14 is located radially inwardly from its outer surface 15. It should be understood that term "radially" when used to describe positions of elements in relation to the pod 14 is not intended to be limited to a direction from the center of a circular or cylindrical shape but is applicable to essentially any shape such as oval, rectangular etc.

In addition to the submerged inlet 26, the system 10 may include a closure device in the form of adjustable louvers 28 located in the submerged inlet 26, a stator comprising inlet guide vanes 30 which may be adjustable, a hybrid ram air turbine 32 directly coupled to a permanent magnet generator 34, and, adjustable exhaust panels 36. Each of these components of system 10 is discussed separately below.

Considering initially the submerged inlet 26, reference is made to Figs. 1 and 2. In the presently preferred embodiment, the submerged inlet 26 is located downstream from the forward end 16 of the pod 12 and not at the nose or forward end 16 as contemplated, for example, in systems of the type disclosed in U.S. Patent No. 6,270,309. The submerged inlet 26 preferably extends around substantially the entire periphery of the outer surface 15 of the pod housing 14, e.g. up to 360° in the configuration of pod 12 illustrated in the drawings. It includes a curved inlet opening 38 located at the outer surface 15 of the pod housing 14 which is effective to resist flow separation of the air stream 22 as it enters the pod interior 20. Preferably, the cross sectional area of the submerged inlet 26 converges or decreases from the curved inlet opening 38 to the area of the inlet guide vanes 30 where it terminates. Accordingly, the term "submerged inlet" as used herein means a passageway extending into the interior of the pod housing 14, preferably but not necessarily converging in cross section, having an entrance defined by the curved inlet opening 38 which is substantially flush with outer surface 15 of the pod housing 14 at a point of maximum diameter of the pod housing 14. As such, the submerged inlet 26 is not visible when viewing the pod housing 14 from the forward end or aft end, and it is not exposed to ram air. This construction is in contrast to many conventional ram air turbine systems in which one or more inlets project outwardly from the outer surface of the housing or other structure within which the ram air turbine is enclosed, or wherein the inlet is located at the nose of the housing.

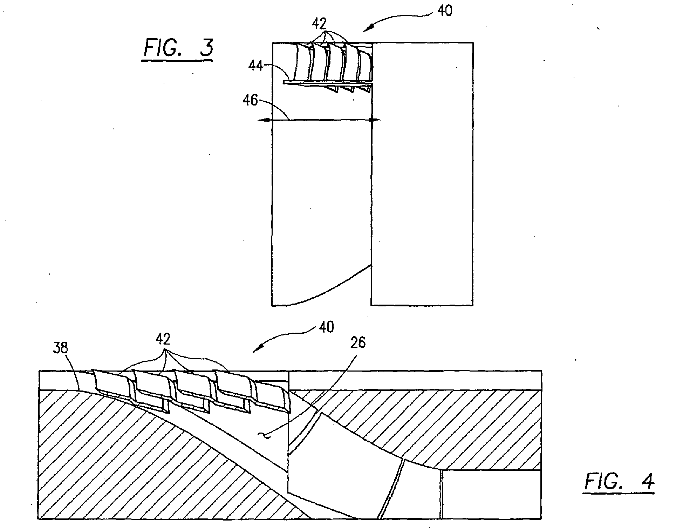

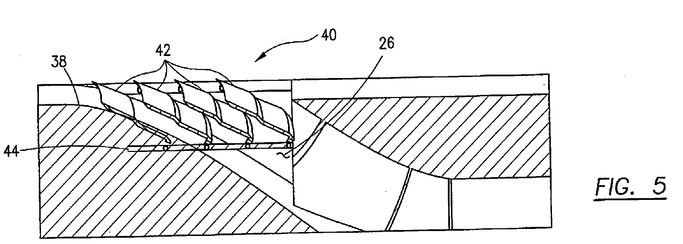

Referring now to Figs. 3-5, a closure device in the form of a number of sets 40 of louvers 42 is mounted in the submerged inlet 26. One set 40 of louvers 42 is shown in the Figs., it being understood that a number of other groups or sets 40 of louvers 42 are circumferentially spaced along the entire extent of the submerged inlet 26. As schematically depicted in the drawings, the individual louvers 42 within each set 40 are oriented side-by-side and connected at one edge to a control rod 44. The control rod 44 is movable in the direction of arrow 46 shown in Fig. 3 to cause the louvers 42 to move between a closed position depicted in Fig. 4 and an open position shown in Fig. 5. A separate control rod 44 is employed for each set 40 of louvers 42, and the control rods 44 may be collectively actuated by a motor and drive mechanism (not shown) or other suitable means.

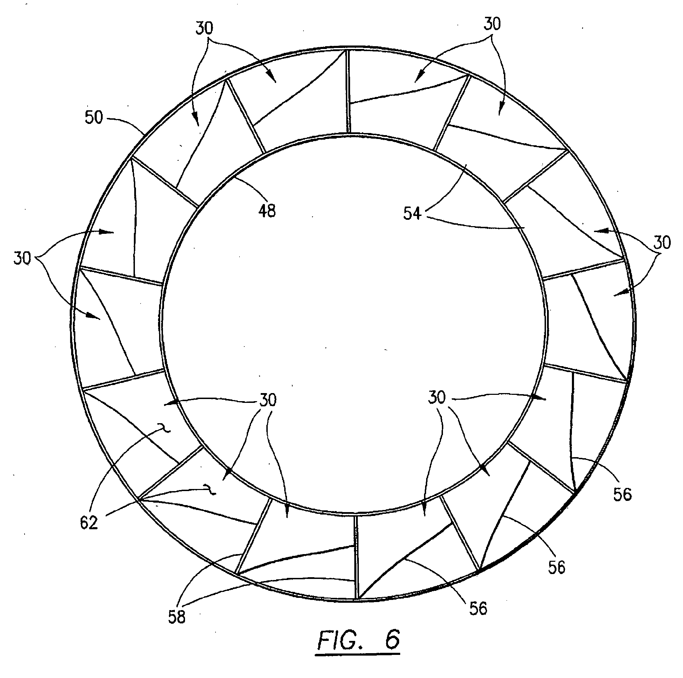

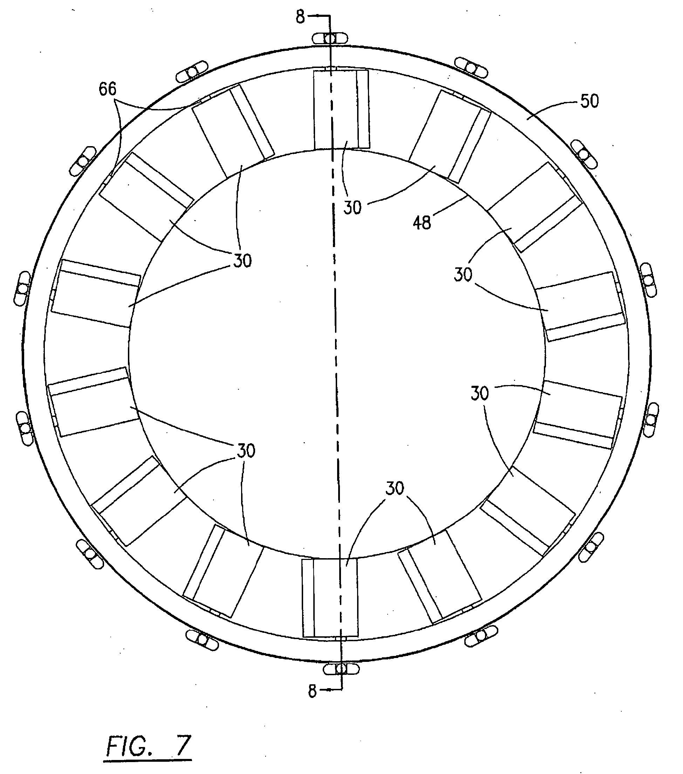

The inlet guide vanes 30 are illustrated in more detail in alternative embodiments shown in Fig. 6, and in Figs. 7-10. In both of these embodiments, the inlet guide vanes 30 act as a stator to direct the air stream 22 onto the ram air turbine 32. In Fig. 6 the guide vanes 30 are fixed, whereas in Figs. 7-10 their angle may be adjusted, as described below.

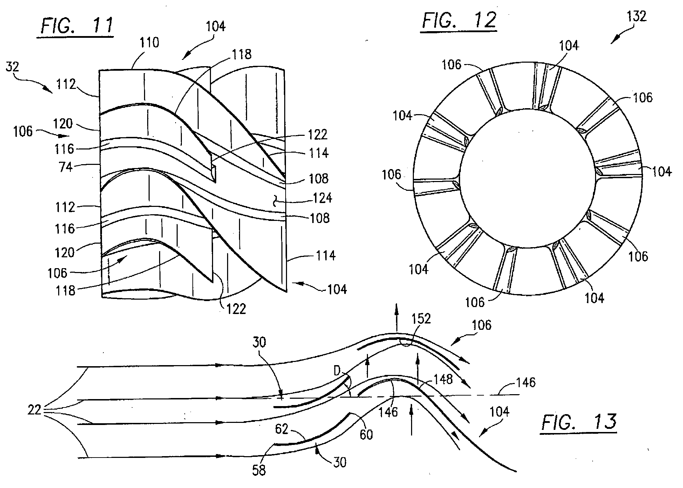

Referring initially to Fig. 6, a number of inlet guide vanes 30 are circumferentially arranged between an inner ring 48 and an outer ring 50. As best seen in Fig. 2, the inner ring 48 is connected to a bracket 52 secured to the pod housing 14 and the outer ring 50 is directly connected to the pod housing 14. Each of the vanes 30 has an inner edge 54 affixed to the inner ring 48, an outer edge 56 mounted to the outer ring 50, a leading end 58 and a trailing end 60. See also Fig. 13. In the presently preferred embodiment, each of the vanes 30 decreases in height, i.e. the dimension between the inner and outer edges 54, 56 thereof, in a direction from the leading end 58 to the trailing end 60. The vanes 30 each have a dished or cup-shaped surface 62 extending between their leading and trailing ends 58, 60, and they are oriented at an angle with respect to the air stream 22 as described more fully below in connection with a discussion of the operation of the system 10 and Fig. 13.

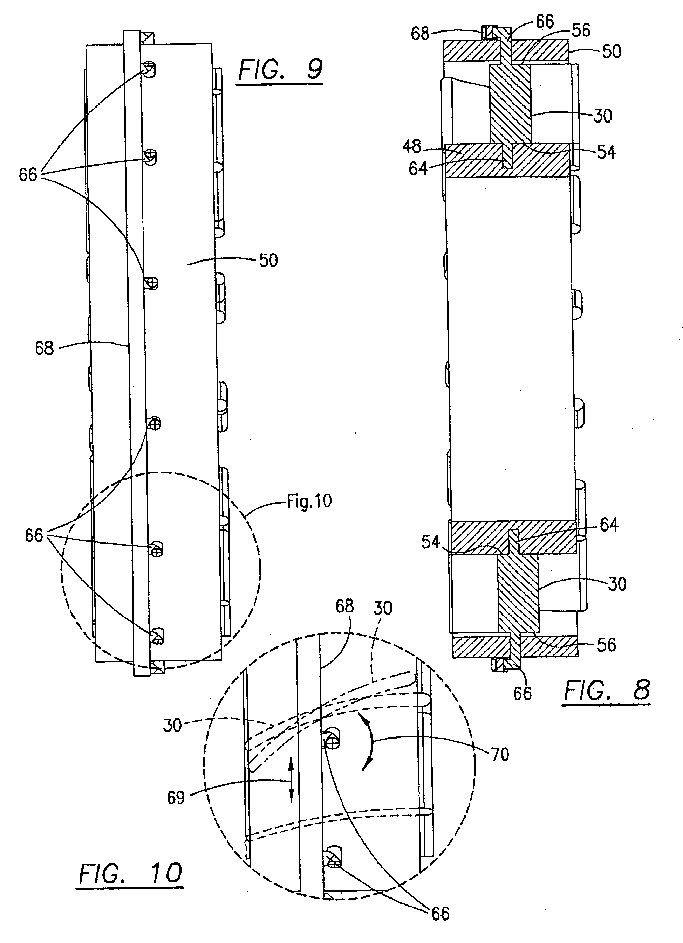

In the alternative embodiment illustrated in Figs. 7-10, the inlet guide vanes 30 may be adjusted in such as way as to vary the angle at which their dished surfaces 62 are oriented relative to the air stream 22 and the hybrid ram air turbine 32. See also Fig. 13 and the discussion below. Each of the vanes 30 has the same configuration as that depicted in Fig. 6, with inner edge 54 mounted by a shaft 64 to inner ring 48 and outer edge 56 mounted on a shaft 66 to outer ring 50. A control arm 68 extends along the outer ring 50 and is connected to each of the shafts 66. The control arm 68 is movable in a circumferential direction as indicated by the arrow 69 in Fig. 10 causing the vanes 30 to pivot on shafts 64, 66 in the direction of arrow 70 to an extent illustrated by the two positions of vanes 30 depicted in phantom lines in Fig. 10. The control arm 68 may be moved by a mechanical connection to a motor (not shown) or other suitable means.

Referring now to Figs. 2 and 11-18, the hybrid ram air turbine 32 of this invention is illustrated. The turbine 32 comprises a turbine housing 72 having a forward end 74, an aft end 76, an outer surface 78 and a hollow interior 80. The cross section of the turbine housing 72 decreases in a direction from the forward end 74 to the aft end 76 forming an essentially frusto-conical shape. As best seen in Fig. 2, a turbine shaft 82 is centrally mounted within the housing interior 80 on a rear bearing 84 at one end and a forward bearing 86 at the opposite end. The rear bearing 84 is carried on a support plate 88 connected to the pod housing 14, and is held in place on the turbine shaft 82 by a locking ring 90. The forward bearing 86 is mounted to a forward bearing support 92, which, in turn, is connected to the inner ring 48 which supports the inlet guide vanes 30. The forward bearing 86 is also held in place on the turbine shaft 82 by a locking ring 90. The turbine housing 72 is connected to the turbine shaft 82, so that they rotate in unison, by an aft turbine bracket 94 and a forward turbine bracket 96.

In the presently preferred embodiment, the turbine shaft 82 is directly connected by a flex coupling 98 to the input shaft 100 of generator 34. No gear box, lubrication system or other interface connection between turbine shaft 82 and generator 34 is required. The generator 34 is supported in position relative to the turbine shaft 82 by the inner ring 48. As noted above, the generator 34 is preferably a permanent magnet generator, although it is contemplated that other types of generators may be employed. Additionally, as schematically depicted in Fig. 2, power control electronics 102 may be coupled to or integrated with the generator 34 to supply a constant voltage output to electronic devices (not shown) typically located in the forward end 16 of the pod 12. The power control electronics 102 are effective to either boost or buck the voltage output of the generator 34 independently of the torque and/or shaft speed of the turbine 32. Details of the generator 34 and power control electronics 102 form no part of this invention and are therefore not discussed herein.

The hybrid ram air turbine 32 of this invention is formed with a number of turbine blades 104 which are circumferentially spaced about the turbine housing 72, and a number of splitters 106 each located in between adjacent blades 104. Each of the blades 104 comprises a blade root 108 connected to or integrally formed with the turbine housing 72, a blade tip 110 radially outwardly spaced from the blade root 108, a forward end 112 and an aft end 114. The blades 104 extend the entire length of the turbine housing 72, e.g. from its forward end 74 to the aft end 76. Each of the splitters 106 comprises a splitter root 116 connected to or integrally formed with the turbine housing 72, a splitter tip 118 radially outwardly spaced from the splitter root. 116, a forward end 120 and an aft end 122. Each splitter 106 extends from the forward end 74 of the turbine housing 72 to a terminal location spaced from its aft end 76, preferably about 50% to 60% of the total length of the blades 104, thus forming an open area 124 between adjacent blades 104 where each splitter 106 terminates. See Fig. 11.

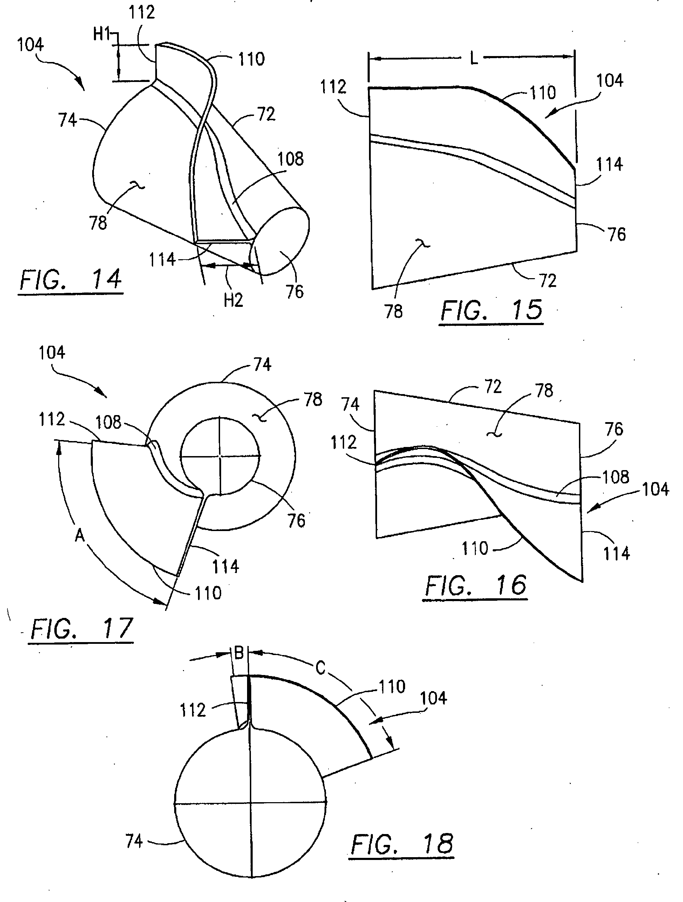

In the presently preferred embodiment, the blade tips 110 of the blades 104 and the splitter tips 118 of the splitters 106 collectively form a generally cylindrical shape from the forward end 74 of the turbine housing 72 to its aft end 76. Consequently, the height dimension of the blades 104, as measured between the blade roots 108 and blade tips 110, and the height dimension of the splitters 106, as measured between the splitter roots 116 and splitter tips 118, increases from the forward end 74 of the turbine housing 72 to its aft end 76 by the same amount as the cross sectional area of the turbine housing 72 decreases in that direction. Compared to prior art turbines, the hybrid ram air turbine 32 of this invention has a high cord to diameter ratio. The term "cord" as used herein refers to the length of the blade root 108 of blades 104 along the turbine housing 72, and "diameter" refers to the diameter of the turbine housing 72. A specific example of this dimensional relationship is given below with reference to a discussion of Figs. 14-18.

The geometry of the turbine blades 104 is generally similar to that of blades used in a radial turbine in which fluid flow is directed radially onto the blades and exits axially, but in this invention the turbine blades 104 are impacted by an axial flow of the air stream 22. The turbine blades 104 are shaped to act predominantly as an impulse turbine blade. The splitters 106, on the other hand, are shaped to function predominantly as a reaction turbine blade. They allow for maximum torque or work out, while minimizing the drag torque or parasitic loss. A further description of the blade 104 and splitter 106 geometry is provided below in connection with a discussion of the overall operation of the system 10.

One presently preferred embodiment of the turbine blades 104 of this invention is depicted in Figs. 14-18 wherein a single blade 104 is shown in position on the turbine housing 72 for ease of illustration and description. In this embodiment, the diameter of the turbine 32 is 25 inches (63.5 cm) which includes both the turbine housing 72 and the blades 104 and splitter 106, and the length "L" of the turbine 32 is 20 inches (50.8 cm). Consequently, the length of each turbine blade 104 is 20 inches (50.8 cm), and the length of each splitter 106 is about 10 inches (25.4 cm). The height H1 of the blades 104 at the forward end 74 of the turbine housing 72, measured between the blade root 108 and blade tip 110, is 8.4 inches (21.3 cm) and the height H2 at the aft end 76 is 4.8 inches (12.2 cm). See Fig. 14. The angle "A" formed by the blade 74 viewing it from the aft end 76 of the turbine housing 72 is about 76.5°, as shown in Fig. 17. Viewing the blade 104 from the forward end 74 of the blade housing 72, as depicted in Fig. 18, two angles "B" and "C" are presented wherein angle B is about 6.5° and angle C is about 70.5°. Given these dimensions of the turbine housing 72 and blades 104, there are preferably a total of five (5) blades 104 circumferentially spaced about the turbine housing 104 and five (5) splitters 106 each located in between two adjacent blades 104. Further, there are preferably a total of fourteen (14) inlet guide vanes 30 employed to direct the air stream 22 to the blades 104 and splitters 106. However, it is contemplated that other numbers of inlet guide vanes 30 could be employed so long as the total number is different than that of the blades 104 and splitters 106 combined to ensure that only one inlet guide vane 30 aligns with one of the blades 104 or splitter 106 at any given time thus preventing acoustic resonance.

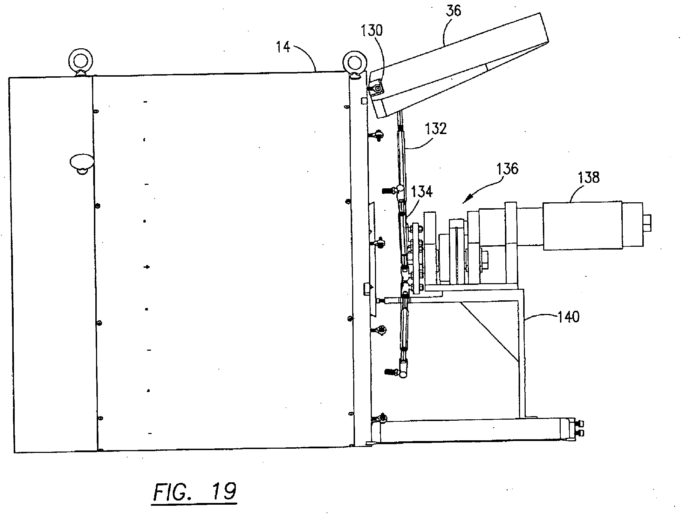

Referring now to Figs 2 and 19, the adjustable exhaust panels 36 of this invention are illustrated in more detail. In the presently preferred embodiment, a number of exhaust panels 36 are located downstream from the turbine 32 in a position to move between an open position and a closed position with respect to one or more exhaust openings 128 which extend substantially entirely about the outer surface 15 of the pod housing 14. One end of each exhaust panel 36 is connected by one or more hinges 130 to the pod housing 14. A pivot arm 132 is connected at one end to each exhaust panel 36, and at the opposite end to an actuator ring 134. The actuator ring 134, in turn, is coupled to the output of gear reducer 136 driven by a motor 138. The motor 138 and gear reducer 136 may be mounted within the pod housing 14 by a support 140.

In response to operation of the motor 138 and gear reducer 136, the actuator ring 134 is rotated in a clockwise or counterclockwise direction. In one direction of rotation of actuator ring 134, each pivot arm 132 is moved radially outwardly causing the exhaust panels 36 to which it is connected to pivot outwardly from a "closed" position, i.e. a position in which the exhaust panels 36 rest against the outer surface 15 of the pod housing 14 and close the exhaust opening(s) 128. It is contemplated that the exhaust panels 36 may be configured to overlap with one another when in the closed position to improve the seal made with the exhaust opening(s) 128. In the presently preferred embodiment, the exhaust panels 36 may be moved to an open position, by rotation of the actuator ring 134 in the opposition direction, wherein an angle of up to about 30° is formed relative to the outer surface 15 of the pod housing 14. For purposes of the present discussion, the term "open position" refers to any amount of spacing between the exhaust panels 36 and the outer surface 15 of the pod housing 14 up to an angle of about 30°.

Having described the structural features of the system 10, its method of operation is now discussed. As an overview, system 10 is designed to maximize free stream flow or the mass flow of an air stream through the pod interior 20 in order to enhance the torque produced by the hybrid ram air turbine 32, and, in turn, increase power generation. Bernoulli's theorem states that the density of potential energy is proportional to the pressure, whereas the density of kinetic energy is proportional to the square of velocity. Applications where high pressures are available, such as conventional hydro-energy, generally employ turbines in which blade area is maximized to increase torque. Most of the energy in such systems is obtain from potential energy or pressure differential, and efficiency may be increased by increasing blade area which, in turn, decreases velocity of the working fluid and increases pressure. On the other hand, low pressure exists in applications such as in pod 12 mounted to the underside of an aircraft wing traveling at 220 or more knots, at an altitude of 25,000, for example. In these applications, the energy density is mainly kinetic energy and it is paramount to maximize the velocity of the air stream, and avoid pressure buildup, in order to obtain as much torque from the turbine in the system as possible.

Several aspects of this invention contribute to the objective of maximizing the mass flow of the air stream 22 through the pod housing 14. The submerged inlet 26 is effective to resist flow separation of the air stream 22 as it enters the pod interior 20. Flow separation results in flow recirculation which reduces the kinetic energy of the air stream 22 in the course of passage downstream from the submerged inlet 26 to the guide vanes 30 and turbine 32.

Maintenance of the kinetic energy of the air stream 22 as it moves through the pod 12 is also enhanced by creating a pressure drop in the aft portion of the pod interior 20. This pressure drop is induced by both the shape of the turbine housing 72 and the presence of the adjustable exhaust ducts 36. As discussed above, the turbine housing 72 decreases in cross section from its forward end 74 to the aft end 76. The spacing or gap between the outer surface 78 of the turbine housing 72 and the pod housing 14 therefore increases moving in the aft direction causing a pressure drop within the pod interior 20. This pressure drop is enhanced or augmented by moving the exhaust ducts 36 from a closed position to an open position as defined above. As the pressure within the pod interior 20 decreases, the velocity of air stream 22 is maintained or at least is not appreciably reduced. Additionally, the pressure drop or negative pressure created at the aft portion of the pod housing 14 tends to draw the air stream 22 into the pod interior 20.

Other features of this invention also contribute to maintaining or at least not appreciably reducing the kinetic energy of air stream 22. As discussed above, the splitters 106 on the turbine housing 72 are only about 50% to 60% of the length of the blades 104, leaving spaces or open areas 124 in between the blades 104. These open areas 124 resist choking or blockage of the air flow 22 as it passes through the turbine 32 which would otherwise reduce kinetic energy. Additionally, the forward end 112 of each blade 104 is shaped to reduce drag in the direction of rotation of the turbine 32, and the aft end 114 thereof may be formed with a notch 142, depicted in phantom lines in Fig. 11, to reduce flow separation and, thus, rotational drag.

Another overall objective of the system 10 of this invention is to extract as much work as possible out of the kinetic energy of air stream 22 so that the torque produced by the turbine 32 is maximized. This objective is met by a combination of the louvers 42, inlet guide vanes 30, turbine blades 104 and splitters 106. While the louvers 42 act as a closure device to open and close the submerged inlet 26, they also function to assist in directing the air stream 22 to the turbine 32 with as little flow separation as possible. An axial flow of the air stream 22 across the blades 104 and splitters 106 is desirable, to the extent possible.

Referring to Fig. 13, a schematic depiction is provided of the air flow 22 in the course of its movement through the inlet guide vanes 30, the blades 104 and the splitters 106. Preferably, the cup-shaped surface 62 of each inlet guide vane 30 forms and angle "D" with an axis 146, one of which is shown in Fig. 13, and each of which is generally parallel to the longitudinal axis of the pod housing 14. Preferably, the angle "D" is in the range of about 22° to 45°. The air stream 22 impacts the surface 62 of each inlet guide vane 30 which deflects it into engagement with the leading surface 146 of each turbine blade 104, as represented by arrow 144, and along the trailing surface 148 thereof as depicted by arrow 150. The air stream 22 is also deflected by the inlet guide vanes 30 into engagement with the leading surface 152 of the splitters 106, as represented by arrow 154. Impact of the air stream 22 with the leading surface 146 of blades 104 and the leading surface 152 of the splitters 106 causes the turbine 32 to rotate, and the magnitude of torque developed is dependent on the kinetic energy of the air stream 22 with which such surfaces 146, 150 are impacted. Additionally, a positive pressure is created along the leading edge 146 of each blade 104 by the air flow represented by arrow 144, and a negative pressure exists along the trailing edge 148 due to the air flow represented by arrow 150. This pressure differential contributes to the torque created by the turbine 32, and, in turn, the power output of the system 10.

It is contemplated that some "tuning" of the system 10 may be desirable to optimize performance. In the embodiment described above with reference to a discussion of Figs. 7-10, the system 10 may be provided with a means to adjust the angle "D" with which each inlet guide vane 30 is oriented with respect to an axis 146 as noted in Fig. 13. Such adjustment would result in altering the point of impact of the air stream 22, represented by arrows 144, 150 and 154, with the blades 104 and splitters 106, respectively, which may improve performance under certain operating conditions.

While the invention has been described with reference to a preferred embodiment, it should be understood by those skilled in the art that various changes may be made and equivalents substituted for elements thereof without departing from the scope of the invention. In addition, many modifications may be made to adapt a particular situation or material to the teachings of the invention without departing from the essential scope thereof.

For example, the particular dimensions given for the turbine 32 and blades 104 in connection with a discussion of Figs. 14-18 are intended for purposes of illustration only. The size of these components, and the other elements of system 10, may be varied according to the application for which the system 10 is intended.

Therefore, it is intended that the invention not be limited to the particular embodiment disclosed as the best mode contemplated for carrying out this invention, but that the invention will include all embodiments falling within the scope of the appended claims.

## Claims

1. A ram air turbine electrical power generating apparatus (10) comprising a generally cylindrical aerodynamically shaped pod housing (14) having a forward end (16), an aft end (18) and an outer surface (15) forming a pod interior (20) with at least one inlet opening (26) which receives a stream of air and at least one exhaust opening (128) through which the stream of air exits said pod interior (20), a turbine (32) mounted within said pod interior (20) in the flow path of said stream of air, a generator (34) mounted within said pod interior (20) and being coupled to said turbine (32), said turbine (32) being effective to drive said generator (34) to produce electrical power, a stator mounted within said pod interior (20) between said at least one inlet opening (26) and said turbine (32) in the flow path of the stream of air, said stator including a number of inlet guide vanes (30) each oriented at an angle relative to the stream of air and positioned so as to direct the stream of air into engagement with said turbine (32), **characterized by**;
at least one exhaust panel (36) pivotally mounted to said pod housing (20) downstream from said turbine (32);
a motor (138) connected to at least one pivot arm (132) which is coupled to said at least one exhaust panel (36), said motor (138) and said at least one pivot arm (132) being effective to move said at least one exhaust panel (36) to a closed position wherein said at least one exhaust panel (36) closes said at least one exhaust opening (128), said motor (138) and said at least one pivot arm (132) being effective to move said at least one exhaust panel (36) to any amount of spacing relative to said at least one exhaust opening (128) up to a predetermined angle formed between said at least one exhaust panel (36) and said outer surface (15) of said pod housing (14);
said at least one exhaust panel (36) being effective to create a pressure drop within at least a portion of said flow path of said stream of air within said pod interior (20) downstream from said turbine (32) when said at least one exhaust panel (36) is spaced from said outer surface (15) of said pod housing (14) and from said at least one exhaust opening (36).

2. The apparatus of claim 1 in which said predetermined angle formed between said outer surface (15) of said pod housing (14) and said at least one exhaust panel (36) is about 30°.

3. The apparatus of claim 1 in which said at least one exhaust panel (36) is mounted by at least one hinge (130) to said pod housing (14), said at least one exhaust panel (36) being pivotal about said at least one hinge (130).

4. The apparatus of claim 1 further including an actuator ring (134) connected to said motor (138) and to said pivot arm (132), said actuator ring (134) being rotatable in one of a clockwise direction and counterclockwise direction in response to operation of said motor (138) to cause said pivot arm (132) to move said at least one exhaust panel (36) to any one of said spaced positions, and said actuator ring (132) being rotatable in the other of a clockwise direction and counterclockwise direction in response to operation of said motor (138) to cause said pivot arm (132) to move said at least one exhaust panel (36) to said closed position.

5. The apparatus of claim 1 in which said motor (138) is coupled to a gear reducer (136).

6. The apparatus of claim 1 in which said at least one exhaust opening (128) extends substantially entirely around said outer surface (15) of said pod housing (14).

## Patentansprüche

1. Stauluftturbinenvorrichtung (10) zur Erzeugung elektrischer Energie, welche ein im Wesentlichen zylindrisches, aerodynamisch geformtes Hülsengehäuse (14), das ein vorderes Ende (16), ein hinteres Ende (18) und eine äußere Oberfläche (15) aufweist, die einen Hülseninnenraum (20) mit wenigstens einer Einlassöffnung (26), das einen Luftstrom aufnimmt, und wenigstens einer Auslassöffnung (128), durch welche der Luftstrom aus dem Hülseninnenraum (20) austritt, bilden, eine Turbine (32), die innerhalb des Hülseninnenraums (20) in dem Strömungsweg des Luftstroms angeordnet ist, einen Generator (34), der innerhalb des Hülseninnenraums (20) angeordnet und mit der Turbine (32) verbunden ist, wobei die Turbine (32) dafür vorgesehen ist, den Generator (34) anzutreiben, um elektrischen Strom zu erzeugen, und einen Stator aufweist, der innerhalb des Hülseninnenraums (20) zwischen der wenigstens einen Einlassöffnung (26) und der Turbine (32) in dem Strömungsweg des Luftstroms angeordnet ist, wobei der Stator eine Vielzahl von Leitschaufeln (30) aufweist, die jede mit einem Winkel relativ zu dem Luftstrom orientiert und so positioniert sind, dass sie den Luftstrom in Eingriff mit der Turbine (32) leiten,
**gekennzeichnet durch**,
wenigstens ein Auslasselement (36), welches gelenkig an dem Hülsengehäuse (14) stromabwärts von der Turbine (32) angebracht ist; einen Motor (138), der mit wenigstens einem Schwenkarm (132) verbunden ist, welcher mit dem wenigstens einen Auslasselement (36) gekoppelt ist, wobei der Motor (138) und der wenigstens eine Schwenkarm (132) dafür vorgesehen sind, das wenigstens eine Auslasselement (36) in eine geschlossene Position zu bewegen, wobei das wenigstens eine Auslasselement die wenigstens eine Auslassöffnung (128) schließt, wobei der Motor (138) und der wenigstens eine Schwenkarm (132) dafür vorgesehen sind, das wenigstens eine Auslasselement (36) in einen beliebigen Abstand relativ zu der wenigstens einen Auslassöffnung (128) bis zu einem bestimmten Winkel zu bewegen, der zwischen dem wenigstens einen Auslasselement (36) und der äußeren Oberfläche (15) des Hülsengehäuses (14) gebildet ist; wobei das wenigstens eine Auslasselement (36) dafür vorgesehen ist, einen Druckabfall innerhalb wenigstens eines Bereichs des Strömungswegs der Luftströmung innerhalb des Hülseninnenraums (20) stromabwärts von der Turbine (32) zu erzeugen, wenn das wenigstens eine Auslasselement (36) von der äußeren Oberfläche (15) des Hülsengehäuses (14) und von der wenigstens einen Auslassöffnung (36) beabstandet ist.

2. Vorrichtung nach Anspruch 1, wobei der bestimmte Winkel, der zwischen der äußeren Oberfläche (15) des Hülsengehäuses (14) und dem wenigstens einen Auslasselement (36) gebildet ist, ungefähr 30°C beträgt.

3. Vorrichtung nach Anspruch 1, bei welcher das wenigstens eine Auslasselement mittels wenigstens eines Scharniers (130) an dem Hülsengehäuse (14) angebracht ist, wobei das wenigstens eine Auslasselement (36) um das wenigstens eine Scharnier (130) schwenkbar ist.

4. Vorrichtung nach Anspruch 1, welche des Weiteren einen Betätigungsring (134) aufweist, der mit dem Motor (138) und dem Schwenkarm (132) verbunden ist, wobei der Betätigungsring (134) entweder im Uhrzeigersinn oder im Gegenuhrzeigersinn als Reaktion auf den Betrieb des Motors (138) rotierbar ist, um zu bewirken, dass der Schwenkarm (132) das wenigstens eine Auslasselement (36) in eine beliebige der beabstandeten Positionen bewegt, und wobei der Betätigungsring (134) in dem anderen des Uhrzeigersinns oder Gegenuhrzeigersinns als Reaktion auf den Betrieb des Motors (138) rotierbar ist, um zu bewirken, dass der Schwenkarm (132) das wenigstens eine Auslasselement (36) in die geschlossene Position bewegt.

5. Vorrichtung nach Anspruch 1, wobei der Motor (138) mit einem Getriebereduzierelement bzw. einem Vorgelege (136) verbunden ist.

6. Vorrichtung nach Anspruch 1, bei welchem sich die wenigstens eine Auslassöffnung (128) im Wesentlichen vollständig um die äußere Oberfläche (15) des Hülsengehäuses (14) erstreckt.

## Revendications

1. Appareil générateur de courant électrique à turbine d'air dynamique (10) comportant un boîtier (14) aérodynamique de forme générale cylindrique, avec une extrémité antérieure (16), une extrémité postérieure (18) et une surface extérieure (15) qui détermine collectivement un intérieur de boîtier (20) ayant au moins une ouverture d'entrée (26) qui reçoit un courant d'air et au moins une ouverture de sortie (128) par laquelle le courant d'air quitte l'intérieur (20) dudit boîtier, une turbine (32) montée à l'intérieur (20) dudit boîtier dans le flux de l'air dudit courant d'air, un générateur (34) monté à l'intérieur (20) dudit boîtier et couplé avec ladite turbine (32), ladite turbine (32) étant agencée pur entraîner ledit générateur (34) en vue de produire du courant électrique, un stator monté à l'intérieur dudit boîtier (20) entre ladite au moins une ouverture d'entrée (26) et ladite turbine (32) dans le flux d'air dudit courant d'air, ledit stator comprenant une série de pales d'entrée de guidage (30) dont chacune est orientée selon un angle par rapport au courant d'air et positionnée de manière à diriger le flux d'air en contact avec ladite turbine (32), **caractérisé par** :
au moins un panneau d'échappement (36) monté de façon pivotante par rapport audit panneau d'échappement (20) en aval de ladite turbine (32),
un moteur (138) connecté à au moins un bras pivotant (132) qui est couplé audit au moins un panneau d'échappement (36), ledit moteur (138) et ledit au moins un bras pivotant (132) étant agencés pour déplacer ledit au moins un panneau d'échappement (36) dans une position fermée dans laquelle ledit au moins un panneau d'échappement (36) ferme ladite au moins une ouverture de sortie (128), ledit moteur (138) et ledit au moins un bras pivotant (132) étant agencés pour déplacer ledit au moins un panneau d'échappement (36) dans n'importe quel espacement relatif à ladite au moins une ouverture de sortie (128) jusqu'à un angle prédéterminé formé entre ledit au moins un panneau d'échappement (36) et ladite surface extérieure (15) dudit boîtier (14) ;
ledit au moins un panneau d'échappement (36) étant agencé pour créer une chute de pression à l'intérieur d'au moins une portion du flux d'air dudit courant d'air à l'intérieur dudit boîtier (20), en aval par rapport à ladite turbine (32) lorsque ledit au moins un panneau d'échappement (36) est espacé de ladite surface extérieure (15) dudit boîtier (14) et dudit au moins un panneau d'échappement (36).

2. Appareil selon la revendication 1, dans lequel l'angle prédéterminé formé entre ladite surface extérieure (15) dudit boîtier (14) et ledit au moins un panneau d'échappement (36) est de l'ordre de 30°.

3. Appareil selon la revendication 1, dans lequel ledit au moins un panneau d'échappement (36) est monté au moyen d'au moins une charnière (130) sur ledit boîtier (14), ledit au moins un panneau d'échappement (36) étant pivotant autour de ladite au moins une charnière (130).

4. Appareil selon la revendication 1, comprenant en outre une bague d'actionnement (134) connectée audit moteur (138) et audit bras pivotant (132), ladite bague d'actionnement (134) étant rotative dans l'une des directions dans le sens d'une montre ou dans le sens inverse d'une montre, en réponse à une action du moteur (138) provoquant un mouvement du bras pivotant (132) pour déplacer ledit au moins un panneau d'échappement (36) vers n'importe laquelle des positions espacées, et ladite bague d'actionnement (134) étant rotative dans l'autre des directions dans le sens d'une montre ou dans le sens inverse d'une montre en réponse à une action du moteur (138) provoquant un mouvement du bras pivotant (132) pour déplacer ledit au moins un panneau d'échappement (36) dans ladite position fermée.

5. Appareil selon la revendication 1, dans lequel ledit moteur (138) est couplé à un engrenage réducteur (136).

6. Appareil selon la revendication 1, dans lequel ladite au moins une ouverture de sortie (128) s'étend sensiblement à travers tout autour de ladite surface extérieure (15) dudit boîtier (14).
